Europäisches Patentamt

European Patent Office

Office européen des brevets

(11) Publication number : **0 518 781 A2**

(19)

(12) # EUROPEAN PATENT APPLICATION

(21) Application number : **92401641.3**

(22) Date of filing : **12.06.92**

(51) Int. Cl.⁵ : **G03B 7/08**

(30) Priority : **13.06.91 JP 168948/91**

(43) Date of publication of application :
**16.12.92 Bulletin 92/51**

(84) Designated Contracting States :
**DE FR GB**

(71) Applicant : **SONY CORPORATION**
**7-35, Kitashinagawa 6-chome Shinagawa-ku**
**Tokyo (JP)**

(72) Inventor : **Ishihara, Katsumi**
**c/o Sony Corporation, 7-35 Kitashinagawa**
**6-chome**
**Shinagawa-ku, Tokyo (JP)**
Inventor : **Shindo, Mitsuyoshi**
**c/o Sony Corporation, 7-35 Kitashinagawa**
**6-chome**
**Shinagawa-ku, Tokyo (JP)**
Inventor : **Momochi, Nobuchika**
**c/o Sony Corporation, 7-35 Kitashinagawa**
**6-chome**
**Shinagawa-ku, Tokyo (JP)**

(74) Representative : **Thévenet, Jean-Bruno et al**
**Cabinet BEAU DE LOMENIE 55 rue**
**d'Amsterdam**
**F-75008 Paris (FR)**

(54) **Electronic still camera having an automatic iris control with manual override.**

(57) The electronic still camera is designed to improve ease of operation by reconciling the operability in the shutter speed priority mode and the precision in the manual mode.

This is achieved by an alternation means (33,39) for alternating between said first mode and said second mode coupled with

a shutter speed selection means (32) for selecting said shutter speed, and

a shutter speed setting means (38) for setting the shutter speed selectable by means of said shutter speed selection means in said first mode larger than the shutter speed selectable in said second mode.

Because the selectable shutter speeds in the manual mode are set more precisely than in the shutter speed priority mode, the shutter speeds corresponding to the characteristic of each mode can be set.

FIG. 1

EP 0 518 781 A2

## BACKGROUND OF THE INVENTION

This invention relates to an electronic still camera, having an automatic iris control with manual override and is suitably applied to the electronic still camera especially equipped with the charge-coupled device.

In conventional electronic still camera, there are some cameras which are capable of recording the picture signals to be obtained by photographing the subject using the charge-coupled device (hereinafter referred to CCD) on the magnetic disc.

This type of the electronic still camera is arranged to reproduce the picture on the display panel of CRT connected to the said electronic still camera by reproducing the picture signals recorded on the magnetic disc.

In this type of the electronic still cameras, there are some which are equipped with the shutter speed priority mode as the automatic exposure (AE) mode or the manual mode.

In the shutter speed priority mode, the photographer sets the optional shutter speed depending on his desired effect on the image, and the electronic still camera sets automatically the optimum iris value for correct exposure corresponding to the said shutter speed.

Accordingly, in the shutter speed priority mode, e.g., in case of photographing a fast moving subject, if shutter speed is set corresponding to the fast moving subject, the optimum iris value setting can be obtained automatically according to the light from the subject. Thus the photographer can photograph the subject with an easier operation of the camera.

In the manual mode, the photographer selects any iris value and shutter speed he desires for the subject. And thus the exposure of the image picture can be freely determined by the photographer's desired effect on his image.

Regarding the electronic still camera equipped with the CCD, because the latitude of the CCD is narrow, it is considered that if the shutter speed setting can be selected more precisely in the manual mode, the more accurate exposure value can be obtained in accordance with the characteristic of the CCD.

On the other hand, the selective value of shutter speed is the same for both the shutter speed priority mode and the manual mode. Therefore, if the shutter speed setting can be more precisely selective in the manual mode, the corresponding shutter speed selectable by the photographer in the shutter speed priority mode becomes too numerous and the operability will be complicated.

## SUMMARY OF THE INVENTION

In view of the foregoing, an object of this invention is to provide an electronic still camera capable of improving the usability, reconciling the easier operability in the shutter speed priority mode and the preciseness in the manual mode, such camera being defined in claim 1, and preferred embodiments thereof being defined in the sub-claims.

## BRIEF DESCRIPTION OF THE DRAWINGS

The nature, principle and utility of the invention will become more apparent from the following detailed description when read in conjunction with the accompanying drawings in which like parts are designated by like reference numerals or characters.

In the accompanying drawings:

Fig. 1 is a block diagram illustrating an electronic still camera according to one embodiment of the present invention;

Fig. 2 is a schematic diagram illustrating the layout of an LCD panel used in the embodiment of figure 1;

Fig. 3 is a plane diagram showing an exterior view of an electronic still camera according to an embodiment of the invention;

Fig. 4 is a flow chart illustrating the shutter speed setting procedure according to the invention;

Figs. 5A and 5B are diagrams showing the shutter speed setting by modes according to the invention;

Fig. 6 is a flow chart illustrating the reproduction mode interrupting procedure; according to the invention; and

Figs 7A and 7B are schematic diagrams illustrating the indicating state of the LCD panel in every mode obtained according to the invention.

## BRIEF DESCRIPTION OF THE INVENTION

Preferred embodiments of this invention will be detailed with reference to the accompanying drawings:

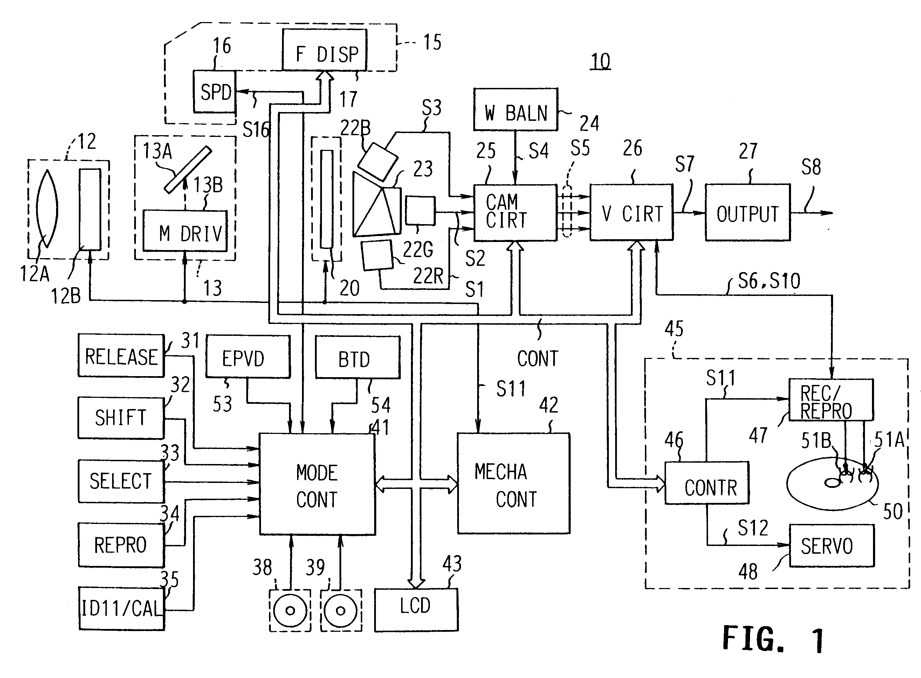

Designated generally at 10 in Fig. 1 is an electronic still camera, the image light obtained via optical system 12 consisting of the lens 12A and the iris unit 12B controlled by the control signal S11 from the mechanism controller 42, is reflected at the reflex mirror 13A of the mirror unit 13, then the said image light projects into the viewfinder 15 and the photographer can view the subject through the optical system 12 at the viewfinder.

The viewfinder is equipped with the SPD (silicon photo-diode) photo-receiving device 16 and detects the quantity of light of the image light inputted into the viewfinder 15 through the reflex mirror 13A, and also depending on the detected result, the detection signal S16 is outputted to the mode controller 41.

The mode controller 41 calculates an exposure value of the image light detected at the SPD photo-receiving device 16, and by outputting the control signal CONT in response to the mode condition to the mechanism controller 42 and the LCD display unit 43, controls the iris unit 12B and shutter 20 and indicates the necessary information on the LCD display unit 43.

The mirror unit 13 is equipped with the mirror driving unit 13B for driving the reflex mirror 13A depending on the control signal S11 from the mechanism controller 42, and when the photographer presses the release switch 31, the reflex mirror 13A is kicked up corresponding to the photographer's operation and then the image light obtained via the optical system 12 is projected into the shutter 20.

The shutter 20 is arranged to function depending on the control signal S11 from the mechanism controller 42. And when the photographer presses the release switch 31, the shutter 20 functions depending on the shutter speed set at the mode controller 41, and inputs the image light into the dichroic prism 23 for the prescribed period of time.

The dichroic prism 23 after resolving the inputted image light into the red element, green element and blue element, inputs each element into the first CCD 22R, the second CCD 22G and the third CCD 22B.

The first CCD 22R obtains the image signal S1 by imaging the red element of the image light obtained from the dichroic prism 23 and then outputs it to the camera circuit unit 25.

The second CCD 22G obtains the image signal S2 by imaging the green element of the image light obtained from the dichroic prism 23, and then outputs it to the camera circuit unit 25.

The third CCD 22B obtains the image signal S3 by imaging the blue element of the image light obtained from the dichroic prism 23, and then outputs it to the camera circuit unit 25.

The camera circuit unit 25 is arranged to function depending on the control signal CONT from the mode controller 41 and obtains the color signal S5 depending on the color signals S1, S2 and S3 to be obtained from the first CCD 22R, the second CCD 22G and the third CCD 22B and the white balance detection signal S4 to be obtained from the white balance detection unit 24, and outputs the color signal S5 to the video circuit unit 26.

The video circuit unit 26 is arranged to function depending on the control signal CONT from the mode controller 41 and forms the brightness signal and chroma signal from the color signal S5. And the video signal S6, to be obtained depending on these signals, is outputted to the recording/reproducing circuit unit 47 of the magnetic disc driving unit 45.

In the magnetic disc driving unit 45, when the photographer presses the release switch 31, the control signal S11 for controlling the recording/reproducing circuit unit 47 is outputted from the controller 46, depending on the control signal CONT to be outputted from the mode controller 41 from which the servo signal S12 also is outputted to the servo circuit 48.

Hence, the recording/reproducing circuit 47, outputs the video signal S6 inputted to the magnetic head 51A and 51B after modulated to the recording signal, and records a subject image as a still picture on the prescribed recording track of the magnetic disc 50.

On the other hand, when the reproducing switch 34 is pressed and the electronic still camera 10 is set to the reproducing mode condition, the recording/reproducing circuit 47 is shifted to the reproducing condition depending on the control signal CONT to be outputted from the mode controller 41. And the magnetic disc driving unit 45 obtains the video signal S10 by demodulating the reproducing signal obtained from the magnetic disc through the magnetic heads 51A and 51B, and outputs this via the video circuit unit 26 and the output adapter 27 as the output video signal S8.

Furthermore, the mode controller 41 is connected with the mode setting dial 39 for setting various modes, the shift dial 38 and shift switch 32 for selecting various setting values. The details of selective items indicated by the mode setting dial 39, is arranged to be selectable by dialing the shift dial 38 while pressing the shift switch 32.

For example, in a case when the mode setting dial 39 indicates AE (automatic exposure) mode setting item, the shift dial 38 is dialed while the shift switch 32 is being pressed, the corresponding modes, such as programmed mode, iris priority mode, shutter speed priority mode and manual mode, can be set by sequentially shifting these modes.

If the shift dial 38 is dialed without pressing the shift switch 32, the item corresponding to the mode already set for the electronic still camera 10, can be selected.

For example, in a case when the shutter speed priority mode is set, the shift dial 38 is dialed without pressing the shift 32, the shutter speed can be shifted sequentially.

Furthermore, the mode controller 41 is connected with the select switch 33 for shifting the segment display of the LCD (liquid crystal device) panel 43, and the ID11/calendar shifting switch 35, and the electronic still camera 10 can be controlled to various conditions according to the photographer's purpose. Here, the photographer, in the ID11 mode can set and record a number of 11 figures as desired, and, in the calendar mode, can record the record date, i.e. year, month and day of recording.

The electric power voltage detection circuit 53 and the battery type detection unit 54 are provided in the mode controller 41 and detects the voltage of battery equipped in the electronic still camera 10. And also there is indicated the warning signal on the LCD panel 43 and the viewfinder 17 when the detected voltage is dropped to the predetermined voltage according to the type of batteries.

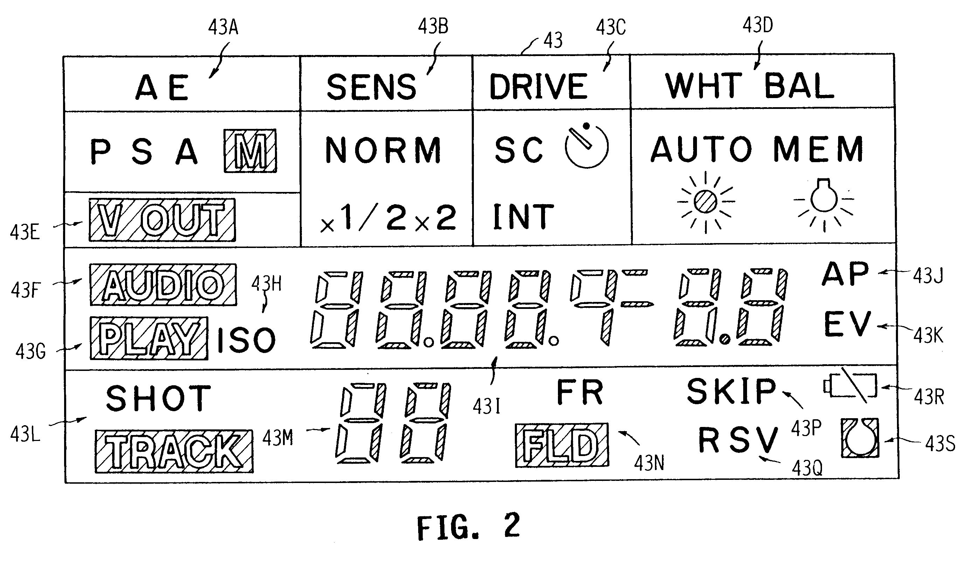

As shown in Fig. 2, the following indications will be displayed on the LCD panel 43 as occasion demands: the AE display 43A indicating the AE setting mode; the sensitivity setting display 43B showing photo sensitivity setting; the photo driving display 43C showing photo driving mode; the white balance setting display 43D showing white balance setting condition; the video output display 43E in case of monitor displaying the picture photographed as it is; the sound recording display 43F in case of simultaneously recording sounds; the reproduction display 43G showing reproducing mode; the data display 43I showing segmentally the shutter speed, iris value, time and the other various data; the standard display 43H showing the standards of values indicated on the data display 43I; the time distinction display 43J showing the time indicated on the data display 43I in either morning or afternoon; the compensation display 43K in case of compensating the aperture value; the data display 43M showing number of pictures shot and/or present track; the data distinction display 43L showing classification of data indicated on the data display 43M; the recording mode display 43N showing distinction of recording method, frame or field recording; the skip track making display 43P for making the empty track on the magnetic disc; the reservation display 43Q for making the sound track in advance; the battery warning display 43R showing battery condition; the dew condensation display 43S.

Shutter Speed Setting Procedure

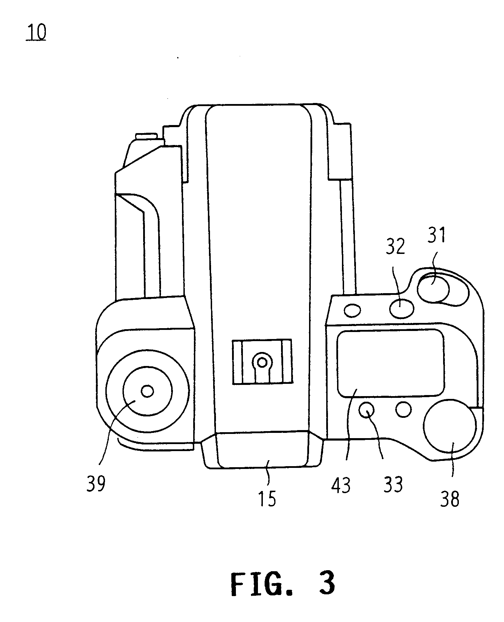

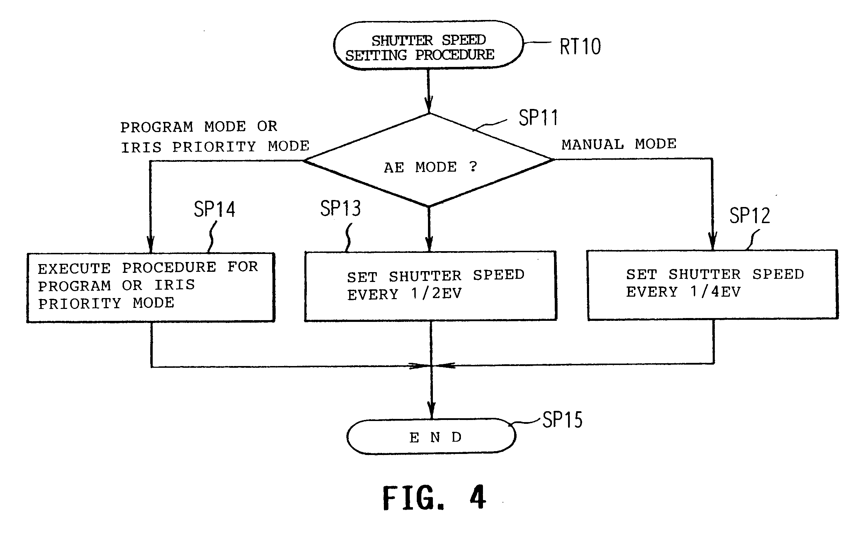

Fig. 3 having the identical numbers/symbols with the corresponding parts in Fig. 1, shows an exterior view of the electronic still camera 10. And when the photographer dials the shift dial 38, the mode controller 41 (Fig. 1) enters the shutter speed setting procedure RT10 as shown in Fig. 4 and discerns the AE mode set presently at the step SP11.

Then if the mode presently set is the manual mode, the mode controller 41 moves to the next step SP12, and then the photographer can set the shutter speed SP every 1/4EV (EV shows exposure value and light value doubles for every additional 1EV) by dialing the shift dial 38.

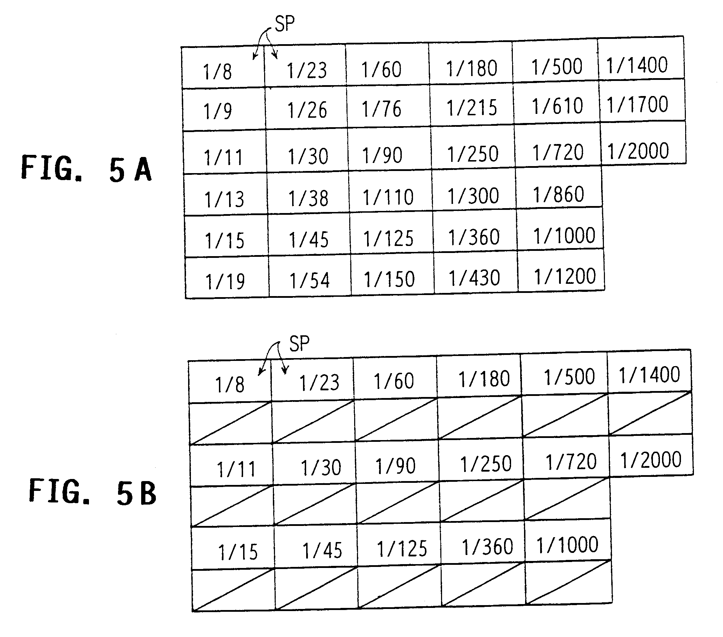

Therefore, when the photographer dials the shift dial 38, the shutter speed SP (second/unit) as shown in Fig. 5A will be displayed sequentially in the LCD panel 43. And the photographer can select the desired shutter speed among these shutter speeds SP.

Accordingly, if the photographer presses the release switch 31, the shutter is cut off at the shutter speed SP displayed on the LCD panel 43, and the mode controller 41 finishes the shutter speed setting procedure at the next step SP15.

On the other hand, if the mode presently set is the shutter speed priority mode, the mode controller 41 moves toward the next step SP13 and then the photographer can set the shutter speed SP every 1/2EV by dialing the shift dial 38.

Therefore, when the photographer dials the shift dial 38, the shutter speed SP shown in Fig. 5B will be sequentially displayed on the LCD panel 43. And then the photographer can select the desired speed value among the shutter speeds SP.

In this manner, when the photographer presses the release switch 31, the shutter is cut off at the shutter speed SP displayed on the LCD panel 43 of the electronic still camera 10. Then the mode controller 41 finishes the shutter speed setting procedure at the step SP15.

In a case when the mode presently set is either the programmed mode or the iris priority mode at the step SP11, the mode controller 41 moves to the next step SP14, and after executing the procedure sequentially displaying the display data for the programmed mode or the iris priority mode on the LCD panel 43 which can be shifted by dialing the shift dial 38, and finishes the shutter speed setting procedure at the next step SP15.

In the foregoing construction, the electronic still camera is arranged to be capable of selecting the setting values in more numerous shutter speed SP set with more precise steps in the manual mode than in the shutter speed priority mode. Thus in the shutter speed priority mode, the selectable shutter speed value is selectable within the range of practical use, and also the shutter speed SP can be more precisely set in the manual mode.

Accordingly, the shutter speed SP can be easily set in the shutter speed priority mode, and also exprosure setting can be more precisely determined in the manual mode.

Thus, the operation depending on the characteristic of each mode can be done by reconciling the operability in the shutter speed priority mode and the preciseness in the manual mode.

According to the foregoing construction, the usability of the electronic still camera 10 can be remarkably improved by shifting the setting steps of selectable shutter speeds in the shutter speed priority mode and in the manual mode.

The embodiment discussed above has dealt with the case of setting the selectable shutter speed SP in the shutter speed priority mode in every 1/2EV and also selectable shutter speed SP in the manual mode is set in every 1/4EV. However, the shutter speed SP setting value is not only limited to the above, but after all it is preferable of the shutter speeds with more precise steps are selectable in the manual mode.

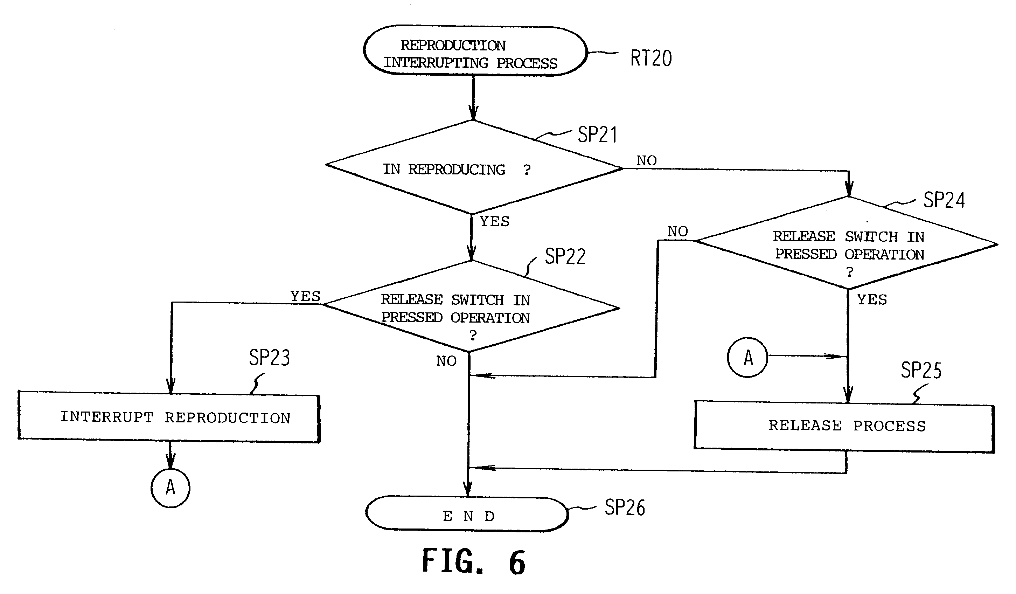

In the reproduction mode the mode controller 41 (Fig. 1) enters the reproduction mode interrupting procedure RT20 as shown in Fig. 6 and discerns whether or not the electronic still camera 11 is in reproducing presently at the step SP 21.

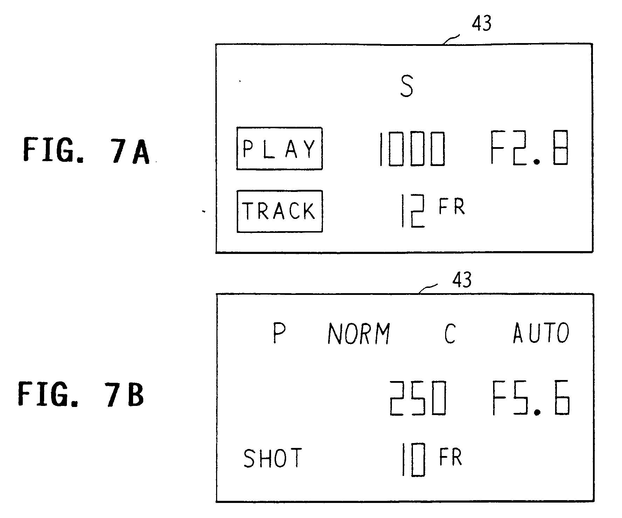

If the affirmative result is obtained this means that the electronic still camera is in reproducing, and various information representing the reproduction state on the LCD display 43 as shown in Fig. 7A moving then to the next step SP22.

In the case of this embodiment, there is indicated such the information as "PLAY" representing the reproduction state, "1000" and "F2.8" representing the shutter speed and iris values respectively when recording the reproduction picture, "TRACK 12" representing the track reproduced, and "FR" representing in the frame reproducing.

The mode controller 41 discerns whether or not the release switch 31 is in pressed operation at step SP22.

If affirmative result is obtained here, this means that the release switch 31 is in pressed operation, the mode controller 41 moves to the next step SP23 to interrupt the reproduction operation, and then executes the release process to image the imaged subject as well as to record thus imaged picture on empty tracks of the magnetic disc to be loaded.

When interrupting the reproducing operation at the step SP23, the mode controller 41 indicates the various information on the LCD display 43 representing the recording mode as shown in Fig. 7B.

In the case of this embodiment, there is indicated such the information corresponding to the recording mode as "P" representing that the program mode is selected as the auto-exposing mode, "NORM" representing that the sensitivity is selected at the normal mode side, "C" representing to photograph successively, "AUTO" representing to adjust automatically the white balance, "250" representing that the shutter speed is 1/250 [sec], "F5.6" representing the iris value, "SHOT 10" representing the residuary number of the shots to be able, "FR" representing the frame recording or the like.

On the contrary if the negative result is obtained at the step SP21, this means that there is the electronic still camera in out of reproducing. The mode controller 41 then moves to the step SP24 and discerns whether or not the release switch 31 is in pressed operation.

If the affirmative result is obtained here, the mode controller moves to the next step SP25 and executes the release process in the same way as the case described above to then complete the reproduction mode interrupting process at the step SP26.

If the negative result is obtained at the step SP24, this means that there is not in reproducing and the release switch is not in pressed operation. The mode controller 41 then completes thus reproduction mode interrupting process at the step SP26.

In the foregoing construction, even when the picture recorded is reproduced from the magnetic disc, the electronic still camera 10 is altered to the recording mode only by press operating the release switch 31.

Therefore, when the photographer is going to start photographing even in reproducing, the electronic still camera 10 may be moved to the recording mode so as to start photographing, only by press operating the release switch 31 as normal photographing operation, without such a special operation that the electronic still camera 10 is alternated to the recording mode.

## Claims

1. An electronic still camera (10) having a first operating mode in which a shutter speed and an iris value is selected by a manual operation, and a second operating mode in which the shutter speed is selected by a manual operation and the iris value is set corresponding to the selected shutter speed, comprising:

   an alternation means (33,39) for alternating between said first mode and said second mode;

   a shutter speed selection means (32) for selecting said shutter speed; and

   a shutter speed setting means (38) for setting the shutter speed selectable by means of said shutter speed selection means in said first mode larger than the shutter speed selectable in said second mode.

2. The electronic still camera according to claim 1:

   said shutter speed setting means (38) setting the number of the shutter speed selectable in said first mode so as to be double to the number of the shutter speed selectable in said second mode.

3. The electronic still camera according to claim 1:

   said shutter speed setting means (38) is able to set

   said shutter speed so that light exposure value varies 1/2 times every step in said first mode.

4. The electronic still camera according to claim 1:

   said shutter speed setting means (38) is able to set said the shutter speed so that the light exposure value 1 times every step in said second mode.

FIG. 1

EP 0 518 781 A2

FIG. 2

FIG. 3

```
                        ╭─────────────────────╮
                        │   SHUTTER  SPEED     │──── RT10
                        │ SETTING  PROCEDURE   │
                        ╰─────────────────────╯
                                   │
                                   ▼
                                                    SP11
  PROGRAM MODE OR                 ╱╲
  IRIS PRIORITY MODE            ╱    ╲         MANUAL MODE
              ◄───────────────╱ AE MODE ? ╲──────────────►
                              ╲            ╱
      SP14          SP13        ╲        ╱           SP12
       │             │            ╲    ╱              │
       ▼             ▼             ╲╱                 ▼
 ┌──────────────┐ ┌──────────────────┐    ┌──────────────────┐
 │EXECUTE       │ │                  │    │                  │
 │PROCEDURE FOR │ │ SET SHUTTER SPEED│    │ SET SHUTTER SPEED│
 │PROGRAM OR IRIS│ │ EVERY 1/2EV      │    │ EVERY 1/4EV      │
 │PRIORITY MODE │ │                  │    │                  │
 └──────────────┘ └──────────────────┘    └──────────────────┘
       │                  │                        │
       └──────────────────┼────────────────────────┘
                          ▼
                  ╭──────────────╮
                  │    E N D     │──── SP15
                  ╰──────────────╯
```

# FIG. 4

**FIG. 5A**

SP

| 1/8 | 1/23 | 1/60 | 1/180 | 1/500 | 1/1400 |
|-----|------|------|-------|-------|--------|
| 1/9 | 1/26 | 1/76 | 1/215 | 1/610 | 1/1700 |
| 1/11 | 1/30 | 1/90 | 1/250 | 1/720 | 1/2000 |
| 1/13 | 1/38 | 1/110 | 1/300 | 1/860 | |
| 1/15 | 1/45 | 1/125 | 1/360 | 1/1000 | |
| 1/19 | 1/54 | 1/150 | 1/430 | 1/1200 | |

**FIG. 5B**

SP

| 1/8 | 1/23 | 1/60 | 1/180 | 1/500 | 1/1400 |
|-----|------|------|-------|-------|--------|
| | | | | | |
| 1/11 | 1/30 | 1/90 | 1/250 | 1/720 | 1/2000 |
| | | | | | |
| 1/15 | 1/45 | 1/125 | 1/360 | 1/1000 | |
| | | | | | |

FIG. 6

REPRODUCTION INTERRUPTING PROCESS — RT20

IN REPRODUCING ? — SP21

NO

YES

RELEASE SWITCH IN PRESSED OPERATION ? — SP22

RELEASE SWITCH IN PRESSED OPERATION ? — SP24

YES

INTERRUPT REPRODUCTION — SP23

NO

NO

RELEASE PROCESS — SP25

YES

A

END — SP26

EP 0 518 781 A2

**FIG. 7A**

43

S

| PLAY | 1000 F2.8 |
| TRACK | 12 FR |

**FIG. 7B**

43

P NORM C AUTO

250 F5.6

SHOT 10 FR